(19) Europäisches Patentamt
European Patent Office
Office européen des brevets

(11) Numéro de publication : **0 326 201 B1**

(12)

# FASCICULE DE BREVET EUROPEEN

(45) Date de publication du fascicule du brevet :
**05.04.95 Bulletin 95/14**

(51) Int. Cl.$^6$ : **G02B 6/06,** G02B 13/08

(21) Numéro de dépôt : **89200072.0**

(22) Date de dépôt : **13.01.89**

(54) **Optique anamorphosante et dispositif anamorphoseur-désanamorphoseur.**

(30) Priorité : **19.01.88 FR 8800551**

(43) Date de publication de la demande :
**02.08.89 Bulletin 89/31**

(45) Mention de la délivrance du brevet :
**05.04.95 Bulletin 95/14**

(84) Etats contractants désignés :
**DE FR GB**

(56) Documents cités :
**DE-A- 2 607 421**
**FR-A- 2 339 224**
**FR-A- 2 534 033**
**FR-A- 2 537 295**
**US-A- 3 212 397**
**US-A- 3 589 795**
**US-A- 4 198 120**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **Philips Electronics N.V.**
**Groenewoudseweg 1**
**NL-5621 BA Eindhoven (NL)**
(84) **DE GB**

(72) Inventeur : **Polaert, Rémy**
**SOCIETE CIVILE S.P.I.D.**
**209, rue de l'Université**
**F-75007 Paris (FR)**

(74) Mandataire : **Landousy, Christian et al**
**Société Civile S.P.I.D.**
**156, Boulevard Haussmann**
**F-75008 Paris (FR)**

## Description

L'invention concerne une optique anamorphosante pour transmettre une image depuis sa surface d'entrée jusqu'à sa surface de sortie en modifiant l'étendue de cette image dans une première direction et en laissant cette étendue inchangée dans une seconde direction sensiblement perpendiculaire à la première direction.

Une invention de ce genre est décrite dans le document FR-A-2 339 224 qui concerne un ensemble de panneaux d'affichage formé de plusieurs panneaux d'affichage opérant collectivement à l'aide d'un dispositif de transformation d'images à fibres optiques. Ce dispositif dilate l'image délivrée par chaque panneau pour la transmettre agrandie sur une face de sortie. Ceci permet d'éliminer des absences d'images dues aux frontières entre panneaux. Ce dispositif de transformation d'images peut prendre la forme d'une combinaison de conduits d'images taillés en biseau. Une forme d'exécution décrite dans ce document concerne un découpage unidimensionnel de l'image à l'aide de trois panneaux alignés D1, D2, D3. Les conduits d'image ont une forme de cylindre ou prisme. On réalise une anamorphose, à l'aide de trois conduits, dont deux conduits latéraux en forme de coin, en combinaison avec un conduit principal de sortie. Mais il faut noter qu'il n'existe nullement une face d'entrée unique sur laquelle on puisse projeter une image. Il ne s'agit donc pas à proprement parler d'une optique unitaire au sens habituel du terme.

Or, pour certaines applications, il est nécessaire de disposer d'une optique anamorphosante qui transforme une image d'entrée en une image de sortie pour laquelle la modification d'étendue d'image dans ladite première direction est effectuée de manière différente en des zones différentes le long de cette direction. Il s'agit alors d'une optique produisant un grandissement/dégrandissement qui peut présenter des valeurs différentes sur toute l'étendue des coordonnées de l'image de sortie dans la direction où s'effectue la modification de l'étendue de l'image.

Ce but est atteint avec une optique anamorphosante qui comporte une combinaison d'un conduit d'images à fibres optiques principal coopérant avec au moins un conduit d'images à fibres optiques annexe, les fibres optiques de chacun desdits conduits d'images possédant un diamètre constant sur toute leur longueur et s'étendant parallèlement entre elles dans chacun d'entre eux depuis la face d'entrée jusqu'à la face de sortie du conduit respectif, chacun desdits conduits ayant la forme d'un cylindre avec ses fibres optiques constitutives s'étendant perpendiculairement à la génératrice du cylindre respectif, ledit conduit d'images principal étant accolé par au moins une partie de sa face d'entrée à toute l'étendue de la face de sortie dudit conduit d'images annexe, la face d'entrée dudit conduit d'images annexe constituant au moins une partie de ladite surface d'entrée de l'optique sur laquelle l'image à modifier est destinée à être formée et la face de sortie dudit conduit d'images principal constituant ladite surface de sortie de l'optique destinée à restituer l'image modifiée, lesdits deux conduits en forme de cylindres étant accolés l'un à l'autre de manière telle que les axes de leurs fibres optiques respectives ne sont pas parallèles entre eux et que leurs génératrices s'étendent parallèlement l'une à l'autre, selon une direction commune définissant ladite seconde direction suivant laquelle l'étendue de l'image en sortie reste inchangée, lesdits conduits d'images principal et annexe étant par ailleurs conformés de façon que la face d'entrée dudit conduit annexe et la partie correspondante de la face de sortie du conduit principal ont une extension différente dans la direction perpendiculaire auxdites génératrices, ladite direction perpendiculaire définissant ainsi ladite première direction suivant laquelle l'étendue de l'image est modifiée, caractérisée en ce que les cylindres principal et annexe sont en outre conformés de manière telle que le conduit d'images principal débouche, par une autre partie de sa face d'entrée adjacente à celle accolée à la face de sortie du conduit d'images annexe, dans le prolongement direct de la face d'entrée dudit conduit annexe pour constituer une autre partie de ladite surface d'entrée de l'optique, de sorte que l'image formée sur l'ensemble de cette surface d'entrée présente, en sortie, un(e) grandissement/réduction différent(e) en au moins deux parties selon ladite première direction.

Il est aussi souhaitable de faire que la résolution devienne progressivement de plus en plus faible lorsque l'on passe de la partie centrale aux parties latérales du champ de vision. Il peut bien évidemment s'agir d'une partie droite et d'une partie gauche d'image et réciproquement.

Ce but est atteint avec une optique anamorphosante qui comporte une combinaison d'un conduit d'images à fibres optiques principal coopérant avec au moins un conduit d'images à fibres optiques annexe, les fibres optiques de chacun desdits conduits d'images possédant un diamètre constant sur toute leur longueur et s'étendant parallèlement entre elles dans chacun d'entre eux depuis la face d'entrée jusqu'à la face de sortie du conduit respectif, chacun desdits conduits ayant la forme d'un cylindre avec ses fibres optiques constitutives s'étendant perpendiculairement à la génératrice du cylindre respectif, ledit conduit d'images principal étant accolé par au moins une partie de sa face d'entrée à toute l'étendue de la face de sortie dudit conduit d'images annexe, la face d'entrée dudit conduit d'images annexe constituant au moins une partie de ladite surface d'entrée de l'optique sur laquelle l'image à modifier est destinée à être formée et la face de sortie dudit conduit d'images principal constituant ladite surface de sortie de l'optique destinée à restituer l'image modifiée, lesdits deux conduits en forme de cylindre étant accolés l'un à l'autre de manière telle que les axes de leurs fibres optiques respectives ne sont pas parallèles entre eux et que leurs génératrices s'étendent parallèlement l'une à l'autre, selon une direction commune définissant ladite seconde direction suivant laquelle l'étendue de l'image en sortie reste inchangée, lesdits conduits d'images principal et annexe étant par ailleurs conformés de façon que la face d'entrée dudit conduit annexe et la partie correspondante de la face de sortie du conduit principal ont une extension différente dans la direction perpendiculaire auxdites génératrices, ladite direction perpendiculaire définissant ainsi ladite première direction suivant laquelle l'étendue de l'image est modifiée, caractérisée en ce que les conduits d'images principal et annexe sont accolés l'un à l'autre selon une interface incurvée, de sorte que l'image formée sur la surface d'entrée présente, en sortie, un(e) grandissement/réduction continûment variable selon ladite première direction.

Un des buts poursuivis par l'invention est d'avoir une résolution différente au centre et sur les bords du champ de vision. Ceci peut être obtenu en disposant conjointement, de part et d'autre de la zone centrale, d'un champ d'observation plus large mais de résolution moindre. En effet, lorsqu'une scène est observée par un observateur, il centre son attention sur une partie qui l'intéresse et est moins attentif aux parties environnantes. L'optique anamorphosante doit donc permettre de fournir à l'observateur un nombre accru d'informations dans cette partie centrale et ceci même au détriment des parties latérales. Le champ de vision de l'observateur va ainsi pouvoir être décomposé en deux parties, une partie centrale et le reste du champ de vision, où deux niveaux de résolution seront obtenus.

Selon la première variante, dans la direction où l'étendue de l'image est modifiée, l'image transmise comprend au moins deux parties présentant chacune un grandissement ou une réduction différent(e).

Pour cela :
- le conduit d'images à fibres optiques principal, dont les axes des fibres optiques parallèles entre eux définissent l'axe optique de l'optique anamorphosante, a la forme d'un prisme polygonal, avec sa face de sortie et la partie de sa face d'entrée qui s'étend dans la surface d'entrée de l'optique planes et sensiblement perpendiculaires audit axe optique, et avec la partie de sa face d'entrée qui est accolée à la face de sortie du conduit d'images annexe plane et inclinée par rapport audit axe optique, en coupant l'autre partie selon une arête principale,
- et le conduit d'images à fibres optiques annexe a la forme d'un prisme triangulaire, avec sa face d'entrée plane et coupant sa face de sortie également plane selon une arête annexe en formant un angle déterminé, ladite arête annexe se confondant avec ladite arête principale lorsque les deux conduits d'images sont accolés, les axes des fibres optiques parallèles entre eux dudit conduit annexe étant obliques par rapport à l'axe optique, et ces axes étant dirigés vers l'axe de l'optique anamorphosante dans le sens de propagation des rayons lumineux.

Selon la seconde variante, il est aussi possible de faire que la résolution devienne progressivement de plus en plus faible lorsque l'on passe de la partie centrale aux parties latérales du champ de vision. Il peut bien évidemment s'agir d'une partie droite et d'une partie gauche d'image et réciproquement.

Selon cette seconde variante l'image est transmise avec un grandissement ou une réduction progressif(ve) dans la direction où apparaît la modification d'étendue.

Pour cela :
- le conduit d'images à fibres optiques principal a la forme d'un cylindre dont la directrice possède un premier segment courbe et au moins un second segment opposé au premier, avec une face d'entrée courbe, qui est la surface engendrée par la génératrice du cylindre s'appuyant sur ledit premier segment courbe de la directrice, et une face de sortie qui est la surface engendrée par la génératrice du cylindre s'appuyant sur ledit second segment opposé de la directrice, les axes des fibres optiques dudit conduit parallèles entre eux définissant l'axe optique de l'optique anamorphosante,
- et le conduit d'images à fibres optiques annexe a la forme d'un cylindre ayant une face d'entrée, et une face de sortie courbe, complémentaire et accolée à la face d'entrée courbe du conduit principal et accolée à celle-ci, les axes des fibres optiques du conduit annexe étant obliques par rapport à l'axe optique et ces axes étant dirigés vers l'axe de l'optique anamorphosante dans le sens de la propagation des rayons lumineux.

L'optique anamorphosante peut être utilisée de sorte que sa surface de sortie coïncide avec la surface objet d'un objectif de sortie.

Une telle optique anamorphosante peut également être utilisée selon un trajet inverse de la lumière pour constituer une optique désanamorphosante.

Pour cela l'invention concerne également un dispositif anamorphoseur-désanamorphoseur caractérisé en ce qu'il comprend deux optiques anamorphosantes telles que définies plus haut, l'une étant utilisée pour former une première image agrandie/réduite et l'autre étant utilisée inversée pour reconstituer une image non agrandie/non réduite.

L'invention sera mieux comprise à l'aide des figures suivantes données à titre d'exemple non limitatif qui représentent :

Figures 1A, 1B, 1C, 1D : des courbes et deux schémas d'une optique anamorphosante qui réalise un agrandissement ou une réduction uniforme dans une direction dans une partie de l'image.

Figures 2A, 2B, 2C, 2D, 2E : des courbes et trois schémas d'une optique anamorphosante qui réalise un agrandissement ou une réduction progressif(ve) dans une direction dans une partie de l'image.

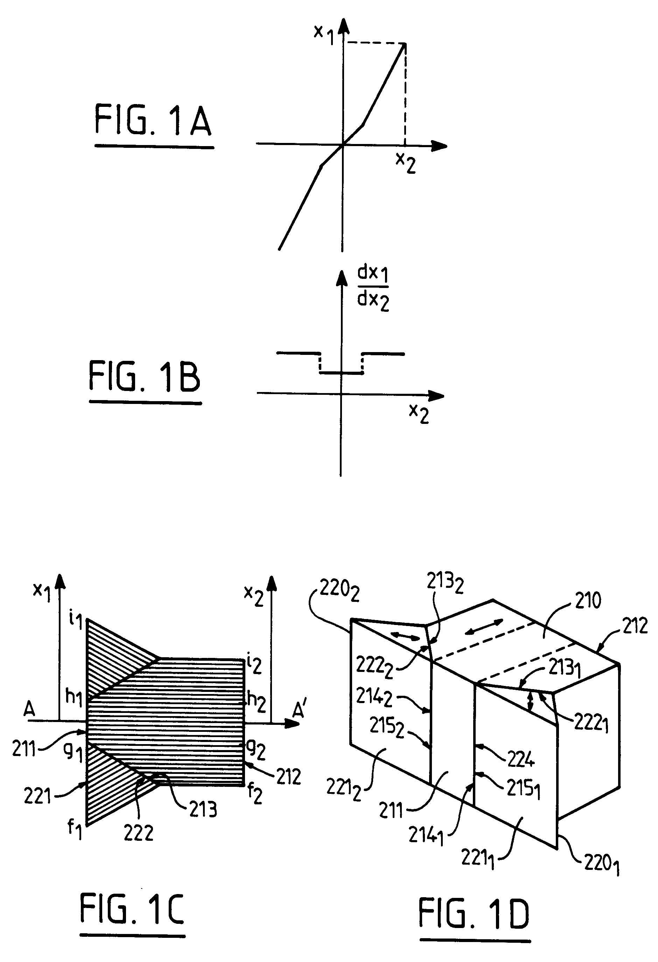

Préférentiellement l'optique anamorphosante décompose le champ de vision en une partie centrale à haute résolution et des parties latérales à plus faible résolution. Dans ce cas l'optique anamorphosante délivre une image uniformément déformée dans une direction dans une certaine partie de l'image. Pour cela les figures 1C et 1D montrent une optique anamorphosante qui délivre une image déformée dans ses parties extrêmes, la partie centrale n'étant pas modifiée.

Une image formée sur la face d'entrée sera transmise par les fibres optiques jusqu'à la face de sortie : les points $f_1$, $g_1$, $h_1$, $i_1$ (situés sur une même ligne horizontale) arriveront respectivement aux points $f_2$, $g_2$, $h_2$ et $i_2$. La partie centrale $g_1$-$h_1$ est représentée sans aucune distorsion en $g_2$-$h_2$, par contre les éléments de l'image tombant entre $h_1$ et $i_1$ et entre $f_1$ et $g_1$ seront réduits d'un certain facteur en dimension latérale. Cette anamorphose n'affecte en rien la distribution verticale des éléments de l'image. L'image formée sur la face de sortie apparaît intacte dans la zone centrale et comprimée pour les zones latérales mais selon l'axe horizontal seulement. Dans l'exemple représenté figures 1C et 1D la partie centrale $g_1$-$h_1$ qui fait 20% du champ horizontal est représentée en $g_2$-$h_2$ par 33% de la surface sensible du détecteur d'images.

La figure 1A indique la variation de l'abscisse $x_1$ sur la face d'entrée en fonction de l'abscisse $x_2$ sur la face de sortie. La figure 1B indique la dérivée $dx_1/dx_2$ ; elle présente des paliers définis par les lignes de transitions entre les blocs de fibres optiques.

Les deux faces 211, 212 sont respectivement placées dans les plans image et objet respectivement d'un objectif d'entrée et d'un objectif de sortie. L'expression "plan image" peut vouloir dire une surface image courbe. Préférentiellement ces deux faces 211, 212 sont sensiblement parallèles. Dans ce cas la direction des fibres optiques va sensiblement de la face 211 à la face 212 pour le conduit principal 210. Pour les conduits annexes $220_1$, $220_2$, la direction des fibres optiques est inclinée par rapport aux faces d'entrée $221_1$, $221_2$ respectivement. Cette direction doit couper respectivement les faces de sortie $222_1$, $222_2$.

Il est possible d'utiliser un seul conduit annexe $220_1$ et de décomposer le champ de vision en deux parties gauche/droite avec des résolutions différentes. Selon le mode préférentiel de l'invention le champ de vision est décomposé en une partie centrale à haute résolution et des parties latérales à plus faible résolution. Dans ce cas on utilise deux conduits d'image annexe $220_1$, $220_2$, les angles que font les fibres optiques avec l'axe optique AA' du système étant égaux et de signe opposé, les axes des fibres optiques étant inclinés vers l'axe de l'optique anamorphosante dans le sens de propagation des rayons lumineux.

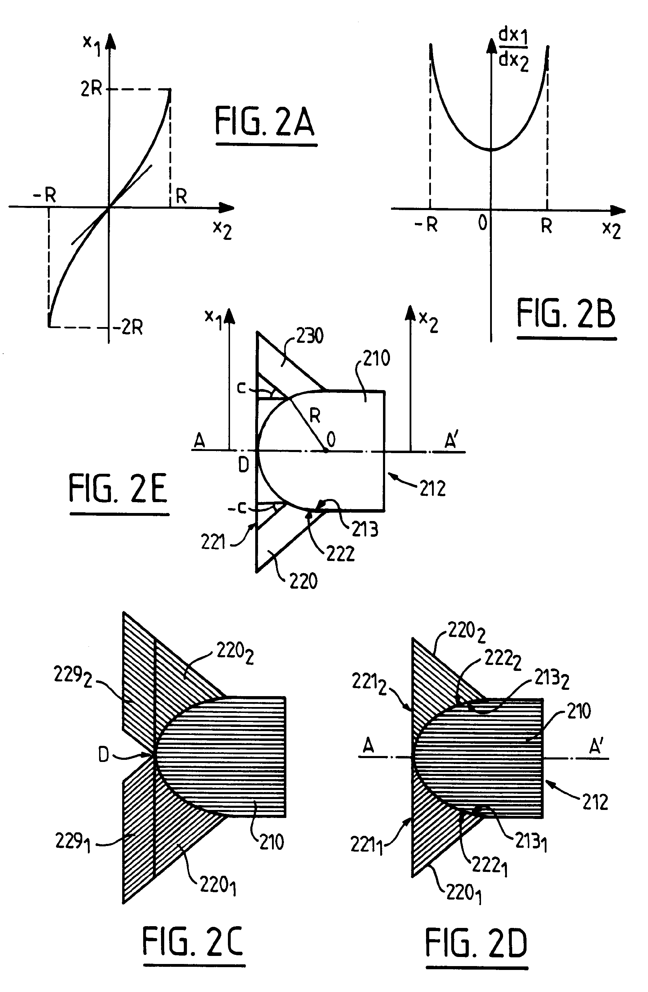

Selon un autre mode de réalisation représenté sur la figure 2D l'optique anamorphosante délivre une image progressivement déformée dans une direction dans une certaine partie de l'image.

La figure 2D montre une optique anamorphosante qui effectue une déformation progressive du champ de vision.

Les repères utilisés sur les figures 1C et 1D sont repris sur les figures 2C et 2D pour désigner les parties analogues. Sur la figure 2D la face d'entrée 211 du conduit principal de la figure 1D a disparu et la face d'entrée $221_1$ du conduit annexe s'étend jusqu'à l'axe optique AA' du système. Les surfaces de contact $213_1$ et $222_1$ respectivement du conduit principal et du conduit annexe ne sont plus planes mais sont dans cet exemple les surfaces latérales d'un cylindre ayant un quart de cercle pour courbe directrice.

Selon ce mode de réalisation on obtient une variation continue et progressive du pas des éléments d'images selon l'axe horizontal (ou vertical en opérant une rotation de l'optique). Les deux conduits latéraux $220_1$ et $220_2$ sont taillés dans un bloc (figure 2C) dont les fibres optiques font respectivement des angles +c et -c par rapport à l'axe optique du système (figure 2E). Ces conduits latéraux sont rodés et polis pour épouser parfaitement le profil curviligne du conduit principal 210. Dans l'exemple de la figure 2E, le conduit 210 est taillé en forme de demi-cylindre convexe de rayon R. Pour la construction, les conduits latéraux $220_1$ et $220_2$ sont taillés en forme de cylindre concave de même rayon R, collés sur le conduit 210 puis rodés et polis jusqu'à ce que le plan d'entrée vienne tangenter le conduit principal au point D en éliminant les parties $229_1$ et $229_2$ (figure 2C).

Avec les notations précédentes, la loi d'anamorphose progressive et continue est :

$$x_1 = x_2 + R \, tg \, c \, [1 - (1 - x_2^2/R^2)^{1/2}].$$

La figure 2A indique pour cet exemple les variations de l'abscisse $x_1$ sur la face d'entrée en fonction de l'abscisse $x_2$ sur la face de sortie (avec c = 45°). La figure 2B indique la dérivée $dx_1/dx_2$, elle présente une variation continue avec un minimum au point D.

Bien évidemment il est possible d'utiliser des surfaces $213_1$ et $222_1$ ou $213_2$ et $222_2$ ayant des formes différentes, par exemple en inversant le sens des concavités, et d'obtenir des lois d'anamorphose différentes.

## Revendications

1. Optique anamorphosante pour transmettre une image depuis sa surface d'entrée jusqu'à sa surface de sortie en modifiant l'étendue de cette image dans une première direction et en laissant cette étendue inchangée dans une seconde direction sensiblement perpendiculaire à la première direction, ladite optique comportant une combinaison d'un conduit d'images à fibres optiques principal (210) coopérant avec au moins un conduit d'images à fibres optiques annexe ($220_1$, $220_2$), les fibres optiques de chacun desdits conduits d'images possédant un diamètre constant sur toute leur longueur et s'étendant parallèlement entre elles dans chacun d'entre eux depuis la face d'entrée jusqu'à la face de sortie du conduit respectif, chacun desdits conduits ayant la forme d'un cylindre avec ses fibres optiques constitutives s'étendant perpendiculairement à la génératrice du cylindre respectif, ledit conduit d'images principal étant accolé par au moins une partie ($213_1$, $213_2$) de sa face d'entrée ($213_1$, 211, $213_2$) à toute l'étendue de la face de sortie ($222_1$, $222_2$) dudit conduit d'images annexe, la face d'entrée ($221_1$, $221_2$) dudit conduit d'images annexe constituant au moins une partie de ladite surface d'entrée de l'optique sur laquelle l'image à modifier est destinée à être formée et la face de sortie (212) dudit conduit d'images principal constituant ladite surface de sortie de l'optique destinée à restituer l'image modifiée, lesdits deux conduits en forme de cylindres étant accolés l'un à l'autre de manière telle que les axes de leurs fibres optiques respectives ne sont pas parallèles entre eux et que leurs génératrices s'étendent parallèlement l'une à l'autre, selon une direction commune définissant ladite seconde direction suivant laquelle l'étendue de l'image en sortie reste inchangée, lesdits conduits d'images principal et annexe étant par ailleurs conformés de façon que la face d'entrée dudit conduit annexe et la partie correspondante de la face de sortie du conduit principal ont une extension différente dans la direction perpendiculaire auxdites génératrices, ladite direction perpendiculaire définissant ainsi ladite première direction suivant laquelle l'étendue de l'image est modifiée, caractérisée en ce que les cylindres principal et annexe sont en outre conformés de manière telle que le conduit d'images principal (210) débouche, par une autre partie (211) de sa face d'entrée adjacente à celle ($213_1$, $213_2$) accolée à la face de sortie du conduit d'images annexe, dans le prolongement direct de la face d'entrée ($221_1$, $221_2$) dudit conduit annexe ($220_1$, $220_2$) pour constituer une autre partie de ladite surface d'entrée de l'optique, de sorte que l'image formée sur l'ensemble de cette surface d'entrée présente, en sortie, un(e) grandissement/réduction différent(e) en au moins deux parties selon ladite première direction.

2. Optique anamorphosante pour transmettre une image depuis sa surface d'entrée jusqu'à sa surface de sortie en modifiant l'étendue de cette image dans une première direction et en laissant cette étendue inchangée dans une seconde direction sensiblement perpendiculaire à la première direction, ladite optique comportant une combinaison d'un conduit d'images à fibres optiques principal (210) coopérant avec au moins un conduit d'images à fibres optiques annexe ($220_1$, $220_2$), les fibres optiques de chacun desdits conduits d'images possédant un diamètre constant sur toute leur longueur et s'étendant parallèlement entre elles dans chacun d'entre eux depuis la face d'entrée jusqu'à la face de sortie du conduit respectif, chacun desdits conduits ayant la forme d'un cylindre avec ses fibres optiques constitutives s'étendant perpendiculairement à la génératrice du cylindre respectif, ledit conduit d'images principal étant accolé par au moins une partie ($213_1$, $213_2$) de sa face d'entrée ($213_1$, 211, $213_2$) à toute l'étendue de la face de sortie ($222_1$, $222_2$) dudit conduit d'images annexe, la face d'entrée ($221_1$, $221_2$) dudit conduit d'images annexe constituant au moins une partie de ladite surface d'entrée de l'optique sur laquelle l'image à modifier est destinée à être formée et la face de sortie (212) dudit conduit d'images principal constituant ladite surface de sortie de l'optique destinée à restituer l'image modifiée, lesdits deux conduits en forme de cylindre étant accolés l'un à l'autre de manière telle que les axes de leurs fibres optiques respectives ne sont pas parallèles entre eux et que leurs génératrices s'étendent parallèlement l'une à l'autre, selon une direction commune définissant ladite seconde direction suivant laquelle l'étendue de l'image en sortie reste inchangée, lesdits conduits d'images principal et annexe étant par ailleurs conformés de façon que la face d'entrée dudit conduit annexe et la partie correspondante de la face de sortie du conduit principal ont une extension différente dans la direction perpendiculaire auxdites génératrices, ladite direction perpendiculaire définissant ainsi ladite première direction suivant laquelle l'étendue de l'image est modifiée, caractérisée en ce que les conduits d'images principal et annexe sont accolés l'un à l'autre selon une interface ($213_1$, $222_1$ ; $213_2$, $222_2$) incurvée, de sorte que l'image formée sur la surface d'entrée présente, en sortie, un(e) grandissement/réduction continûment variable selon ladite première direction.

3. Optique selon la revendication 1, caractérisée en ce que :
- le conduit d'images à fibres optiques principal (210), dont les axes des fibres optiques parallèles entre eux définissent l'axe optique de l'optique anamorphosante, a la forme d'un prisme polygonal, avec sa face de sortie (212) et la partie (211) de sa face d'entrée qui s'étend dans la surface d'entrée de l'optique planes et sensiblement perpendiculaires audit axe optique, et avec la partie ($213_1$, $213_2$) de sa face d'entrée qui est accolée à la face de sortie du conduit d'images annexe plane et inclinée par rapport audit axe optique, en coupant l'autre partie (211) selon une arête principale ($214_1$, $214_2$),
- et le conduit d'images à fibres optiques annexe ($220_1$, $220_2$) a la forme d'un prisme triangulaire, avec sa face d'entrée ($221_1$, $221_2$) plane et coupant sa face de sortie ($222_1$, $222_2$) également plane selon une arête annexe ($215_1$, $215_2$) en formant un angle déterminé, ladite arête annexe ($215_1$, $215_2$) se confondant avec ladite arête principale ($214_1$, $214_2$) lorsque les deux conduits d'images sont accolés, les axes des fibres optiques parallèles entre eux dudit conduit annexe étant obliques par rapport à l'axe optique, et ces axes étant dirigés vers l'axe de l'optique anamorphosante dans le sens de propagation des rayons lumineux.

4. Optique selon la revendication 2, caractérisée en ce que :
- le conduit d'images à fibres optiques principal (210) a la forme d'un cylindre dont la directrice possède un premier segment courbe et au moins un second segment opposé au premier, avec une face d'entrée courbe, qui est la surface engendrée par la génératrice du cylindre s'appuyant sur ledit premier segment courbe de la directrice, et une face de sortie (212) qui est la surface engendrée par la génératrice du cylindre s'appuyant sur ledit second segment opposé de la directrice, les axes des fibres optiques dudit conduit parallèles entre eux définissant l'axe optique de l'optique anamorphosante,
- et le conduit d'images à fibres optiques annexe ($220_1$, $220_2$) a la forme d'un cylindre ayant une face d'entrée ($221_1$, $221_2$), et une face de sortie courbe ($222_1$, $222_2$), complémentaire et accolée à la face d'entrée courbe ($213_1$, $213_2$) du conduit principal (210) et accolée à celle-ci, les axes des fibres optiques du conduit annexe étant obliques par rapport à l'axe optique et ces axes étant dirigés vers l'axe de l'optique anamorphosante dans le sens de la propagation des rayons lumineux.

5. Dispositif anamorphoseur-désanamorphoseur caractérisé en ce qu'il comprend deux optiques anamorphosantes selon une des revendications 1 à 4, l'une étant utilisée pour former une première image agrandie/réduite et l'autre étant utilisée inversée pour reconstituer une image non agrandie/non réduite.

**Patentansprüche**

1. Anamorphotische Optik zur Übertragung eines Bildes von einer Eintrittsfläche bis zu einer Austrittsfläche, wobei die Optik das Ausmaß dieses Bildes in einer ersten Richtung modifiziert und dieses Ausmaß in einer zweiten zur ersten Richtung im wesentlichen senkrechten Richtung unverändert läßt, wobei die Optik eine Kombination aus einem Hauptbildleiter aus Lichtleitfasern (210) umfaßt, die mit wenigstens einem benachbartem Bildleiter aus Lichtleitfasern ($220_1$, $220_2$) zusammenwirken, wobei die Lichtleitfasern jeder der genannten Bildleiter über ihre gesamte Länge hinweg einen konstanten Durchmesser aufweisen und in jedem der Lichtleiter von der Eintrittsfläche bis zur Austrittsfläche des jeweiligen Leiters zueinander parallel verlaufen, wobei jeder der genannten Leiter die Form eines Zylinders hat, wobei die ihn bildenden Lichtleitfasern senkrecht zur Mantellinie des jeweiligen Zylinders verlaufen, wobei an dem genannten Hauptbildleiter wenigstens ein Teil ($213_1$, $231_2$) seiner Eintrittsfläche ($213_1$, 211, $213_2$) an der gesamten Austrittsfläche ($222_1$, $222_2$) des genannten benachbarten Leiters anliegt, wobei die Eintrittsfläche ($222_1$, $222_2$) des genannten benachbarten Lichtleiters wenigstens einen Teil der genannten Eintrittsfläche der Optik bildet, auf der das zu modifizierende Bild erzeugt werden soll, und wobei die Austrittsfläche (212) des genannten Hauptbildleiters die genannte zur Ausgabe des modifizierten Bildes bestimmte Austrittsfläche der Optik bildet, wobei die zwei zylinderförmigen Leiter so aneinanderliegen, daß die Achsen ihrer jeweiligen Lichtleitfasern zueinander nicht parallel sind und ihre Mantellinien parallel zueinander verlaufen, in einer Richtung, die die genannte zweite Richtung definiert, entlang derer das Ausmaß des Bildes am Ausgang unverändert bleibt, wobei der genannte Hauptbildleiter und der benachbarte Bildleiter außerdem so gestaltet sind, daß die Eintrittsfläche des genannten benachbarten Bildleiters und der entsprechende Teil der Austrittsfläche des Hauptbildleiters in zu den genannten Mantellinien senkrechter Richtung eine unterschiedliche Ausdehnung haben, wobei die genannte senkrechte Richtung so die genannte erste Richtung definiert, entlang derer das Ausmaß des Bildes verändert wird, <u>dadurch gekennzeichnet</u>, daß der Hauptzylinder und der benachbarte Zylinder außerdem so gestaltet sind, daß der Hauptbildleiter (212) mit einem anderen Teil (211) seiner Eintrittsfläche, die an der neben der Austrittsfläche des benachbarten Bildleiters angrenzenden Fläche ($213_1$, $213_2$) anliegt, in die direkte Verlängerung der Eintrittsfläche ($221_1$, $221_2$) des genannten benachbarten Leiters ($220_1$, $220_2$) mündet, um einen anderen Teil der genannten Eintrittsfläche der Optik zu bilden, so daß das auf der Gesamtheit der Eintrittsfläche erzeugte Bild am Ausgang in der genannten ersten Richtung in wenigstens zwei Teilen eine unterschiedliche Vergrößerung/Verkleinerung aufweist.

2. Anamorphotische Optik zur Übertragung eines Bildes von einer Eintrittsfläche bis zu einer Austrittsfläche, wobei die Optik das Ausmaß dieses Bildes in einer ersten Richtung modifiziert und dieses Ausmaß in einer zweiten zur ersten Richtung im wesentlichen senkrechten Richtung unverändert läßt, wobei die genannte Optik eine Kombination aus einem Hauptbildleiter aus Lichtleitfasern (210) umfaßt, die mit wenigstens einem benachbartem Bildleiter aus Lichtleitfasern ($220_1$, $220_2$) zusammenwirken, wobei die Lichtleitfasern jeder der genannten Bildleiter über ihre gesamte Länge hinweg einen konstanten Durchmesser aufweisen und in jedem der Lichtleiter von der Eintrittsfläche bis zur Austrittsfläche des jeweiligen Leiters zueinander parallel verlaufen, wobei jeder der genannten Leiter die Form eines Zylinders hat, wobei die ihn bildenden Lichtleitfasern senkrecht zur Mantellinie des jeweiligen Zylinders verlaufen, wobei an den genannten Hauptbildleiter wenigstens ein Teil ($213_1$, $213_2$) seiner Eintrittsfläche ($213_1$, 211, $213_2$) an der gesamten Austrittsfläche ($222_1$, $222_2$) des genannten benachbarten Leiters anliegt, wobei die Eintrittsfläche ($221_1$, $221_2$) des genannten benachbarten Lichtleiters wenigstens einen Teil der genannten Eintrittsfläche der Optik bildet, auf der das zu modifizierende Bild erzeugt werden soll, und wobei die Austrittsfläche (212) des genannten Hauptbildleiters die genannte zur Ausgabe des modifizierten Bildes bestimmte Austrittsfläche der Optik bildet, wobei die zwei zylinderförmigen Leiter so aneinanderliegen, daß die Achsen ihrer jeweiligen Lichtleitfasern zueinander nicht parallel sind und ihre Mantellinien parallel zueinander verlaufen, in einer Richtung, die die genannte zweite Richtung definiert, entlang derer das Ausmaß des Bildes am Ausgang unverändert bleibt, wobei der genannte Hauptbildleiter und der benachbarte Bildleiter außerdem so gestaltet sind, daß die Eintrittsfläche des genannten benachbarten Bildleiters und der entsprechende Teil der Austrittsfläche des Hauptbildleiters in zu den genannten Mantellinien senkrechter Richtung eine unterschiedliche Ausdehnung haben, wobei die genannte senkrechte Richtung so die genannte erste Richtung definiert, entlang derer das Ausmaß des Bildes verändert wird, <u>dadurch gekennzeichnet</u>, daß der Hauptzylinder und der benachbarte Zylinder entlang einer gekrümmten Zwischenfläche ($213_1$, $222_1$; $213_2$, $222_2$) aneinander anliegen, so daß das auf der Eintrittsfläche erzeugte Bild am Ausgang eine stetig veränderbare Vergrößerung/Verkleinerung in der genannten ersten Richtung aufweist.

3. Optik nach Anspruch 1, <u>dadurch gekennzeichnet</u>, daß

- der Hauptbildleiter aus Lichtleitfasern (210), dessen Achsen der zueinander parallelen Lichtleitfasern die optische Achse der anamorphotischen Optik definieren, die Form eines polygonen Prismas hat, wobei dessen Austrittsfläche (212) und der Teil (211) seiner Eintrittsfläche, der in die Eintrittsoberfläche der Optik hineinreicht, plan und im wesentlichen senkrecht zur genannten optischen Achse sind, wobei der Teil ($213_1$, $213_2$) seiner Eintrittsfläche, der an der Austrittsfläche des benachbarten Bildleiters anliegt, plan und relativ zur genannten optischen Achse geneigt ist und dabei den anderen Teil (211) entlang einer Hauptkante ($214_1$, $214_2$) schneidet,

- und der benachbarte Bildleiter aus Lichtleitfasern ($220_1$, $220_2$) die Form eines dreieckigen Prismas hat, wobei dessen Eintrittsfläche ($221_1$, $221_2$) plan ist und seine ebenfalls plane Austrittsfläche ($222_1$, $222_2$) entlang einer benachbarten Kante ($215_1$, $215_2$) schneidet und dabei einen festgelegten Winkel bildet, wobei die genannte benachbarte Kante ($215_1$, $215_2$) mit der genannten Hauptkante ($214_1$, $214_2$) zusammenfällt, wenn die beiden Bildleiter aneinanderliegen, wobei die Achsen der zueinander parallelen Lichtleitfasern relativ zur optischen Achse schräg verlaufen und diese Achsen auf die Achse der anamorphotischen Optik in Richtung der Ausbreitung der Lichtstrahlen gerichtet sind.

4. Optik nach Anspruch 2, <u>dadurch gekennzeichnet</u>, daß

- der Hauptbildleiter aus Lichtleitfasern (210) die Form eines Zylinders hat, dessen Leitlinie einen ersten gekrümmten Abschnitt und wenigstens einen dem ersten Abschnitt gegenüberliegenden zweiten Abschnitt hat, wobei eine gekrümmte Eintrittsfläche, die die durch die Mantellinie des Zylinders beschriebene Oberfläche darstellt, auf dem genannten ersten gekrümmten Abschnitt der Leitlinie liegt und eine Austrittsfläche (212), die die durch die Mantellinie des Zylinders beschriebene Oberfläche darstellt, auf dem genannten zweiten gegenüberliegenden Abschnitt der Leitlinie liegt, wobei die zueinander parallelen Lichtleitfasern des genannten Leiters die optische Achse der anamorphotischen Optik definieren,
- und der benachbarte Bildleiter aus Lichtleitfasern (220$_1$, 220$_2$) die Form eines Zylinders mit einer Eintrittsfläche (221$_1$, 221$_2$) und einer gekrümmten Austrittsfläche (222$_1$, 222$_2$) hat, die zur gekrümmten Eintrittsfläche (213$_1$, 213$_2$) des Hauptbildleiters (210) komplementär ist und an dieser anliegt, wobei die Achsen der Lichtleitfasern des benachbarten Leiters relativ zur optischen Achse schräg verlaufen und diese Achsen auf die Achse der anamorphotischen Optik in Richtung der Ausbreitung der Lichtstrahlen gerichtet sind.

5. Anamorphotisch-deanamorphotische Vorrichtung, <u>dadurch gekennzeichnet</u>, daß sie zwei anamorphotische Optiken nach einem der Ansprüche 1 bis 4 umfaßt, wobei die eine Optik dazu verwendet wird, ein erstes vergrößertes/verkleinertes Bild zu erzeugen, und die zweite Optik dazu verwendet wird, ein nicht-vergrößertes/nichtverkleinertes Bild wiederherzustellen.

## Claims

1. An anamorphic optical system for transmitting an image from its entrance surface to its exit surface by modifying the throughput of this image in a first direction and leaving this throughput unchanged in a second direction which is substantially perpendicular to the first direction, said optical system comprising a combination of a main fibre-optical image guide (210) cooperating with at least one supplementary fibre-optical image guide (220$_1$, 220$_2$), the optical fibres of each of said guides having a constant diameter throughout their length and extending mutually parallel in each of them from the entrance face to the exit face of the respective guide, each of said guides having the form of a cylinder whose constituent optical fibres extend perpendicularly to the generatrix of the respective cylinder, said main image guide being coupled by at least a part (213$_1$, 213$_2$) of its entrance face (213$_1$, 211, 213$_2$) to the whole length of the exit face (222$_1$, 222$_2$) of said supplementary image guide, the entrance face (221$_1$, 221$_2$) of said supplementary image guide constituting at least a part of said entrance surface of the optical system which is adapted to form the image to be modified and the exit face (212) of said main image guide constituting said exit surface of the optical system which is adapted to restore the modified image, said two guides formed as cylinders being interconnected in such a way that the axes of their respective optical fibres are not mutually parallel and that their generatrices extend parallel to one another in accordance with a common direction defining said second direction along which the throughput of the image at the output remains unchanged, said main and supplementary image guides being otherwise shaped in such a way that the entrance face of said supplementary guide and the corresponding part of the exit face of the main guide have a different extension in the direction perpendicular to said generatrices, said perpendicular direction thus defining said first direction along which the throughput of the image is modified, characterized in that the supplementary and main cylinders are also shaped in such a way that the main image guide (210) gives into the direct extension of the entrance face (221$_1$, 221$_2$) of said supplementary guide (220$_1$, 220$_2$) *via* another part (211) of its entrance face adjacent to that (213$_1$, 213$_2$) coupled to the exit face of the supplementary image guide so as to constitute another part of said entrance surface of the optical system, so that the image formed on the whole of this entrance surface presents, at the output, a different magnification/reduction in at least two parts in accordance with said first direction.

2. An anamorphic optical system for transmitting an image from its entrance surface to its exit surface by modifying the throughput of this image in a first direction and leaving this throughput unchanged in a second direction which is substantially perpendicular to the first direction, said optical system comprising a combination of a main fibre-optical image guide (210) cooperating with at least one supplementary fibre-optical image guide (220$_1$, 220$_2$), the optical fibres of each of said guides having a constant diameter throughout their length and extending mutually parallel in each of them from the entrance face to the exit face of the respective guide, each of said guides having the form of a cylinder whose constituent optical fibres extend perpendicularly to the generatrix of the respective cylinder, said main image guide being coupled by at least a part $(213_1, 213_2)$ of its entrance face $(213_1, 211, 213_2)$ to the whole length of the exit face $(222_1, 222_2)$ of said supplementary image guide, the entrance face $(221_1, 221_2)$ of said supplementary image guide constituting at least a part of said entrance surface of the optical system which is adapted to form the image to be modified and the exit face (212) of said main image guide constituting said exit surface of the optical system which is adapted to restore the modified image, said two guides formed as cylinders being interconnected in such a way that the axes of their respective optical fibres are not mutually parallel and that their generatrices extend parallel to one another in accordance with a common direction defining said second direction along which the throughput of the image at the output remains unchanged, said main and supplementary image guides being otherwise shaped in such a way that the entrance face of said supplementary guide and the corresponding part of the exit face of the main guide have a different extension in the direction perpendicular to said generatrices, said perpendicular direction thus defining said first direction along which the throughput of the image is modified, characterized in that the supplementary and main image guides are interconnected along a curved interface $(213_1, 222_1; 213_2, 222_2)$ so that the image formed on the entrance surface presents, at the output, a continuously variable magnification/reduction in accordance with said first direction.

3. An optical system as claimed in Claim 1, characterized in that:
   - the main fibre-optical image guide (210), whose optical fibre axes are parallel to one another and define the optical axis of the anamorphic optical system, has the shape of a polygonal prism, with its exit face (212) and the part (211) of its entrance face which extends in the entrance surface of the optical system being plane and substantially perpendicular to said optical axis, and with the part $(213_1, 213_2)$ of its entrance face which is coupled to the exit face of the supplementary image guide being plane and inclined with respect to said optical axis while intersecting the other part (211) in accordance with a main edge $(214_1, 214_2)$,
   - and the supplementary fibre-optical image guide $(220_1, 220_2)$ has the shape of a triangular prism, with its entrance face $(221_1, 221_2)$ being plane and intersecting its exit

face $(222_1, 222_2)$, which is also plane, in accordance with a supplementary edge $(215_1, 215_2)$ while forming a given angle, said supplementary edge $(215_1, 215_2)$ coinciding with said main edge $(214_1, 214_2)$ when the two image guides are coupled, the mutually parallel axes of the optical fibres of said supplementary guide being oblique with respect to the optical axis and these axes being directed towards the axis of the anamorphic optical system in the direction of propagation of the light beams.

4. An optical system as claimed in Claim 2, characterized in that:
   - the main fibre-optical image guide (210) has the shape of a cylinder whose directrix has a first curved segment and at least a second segment opposite to the first, with a curved entrance face which is the surface generated by the generatrix of the cylinder engaging said first curved segment of the directrix, and an exit face (212) which is the surface generated by the generatrix of the cylinder engaging said opposite second segment of the directrix, the mutually parallel axes of the optical fibres of said guide defining the optical axis of the anamorphic optical system,
   - and the supplementary fibre-optical image guide $(220_1, 220_2)$ has the shape of a cylinder with an entrance face $(221_1, 221_2)$ and a curved exit face $(222_1, 222_2)$ being complementary and coupled to the curved entrance face $(213_1, 213_2)$ of the main guide (210) and being coupled thereto, the axes of the optical fibres of the supplementary guide being oblique with respect to the optical axis and these axes being directed towards the axis of the anamorphic optical system in the direction of propagation of the light beams.

5. An anamorphic/deanamorphic arrangement, characterized in that it comprises two anamorphic optical systems as claimed in any one of Claims 1 to 4, one system being used for forming a first magnified/reduced image and the other being used inversely for reconstituting a non-magnified/non-reduced image.

## FIG. 1A

## FIG. 1B

## FIG. 1C

## FIG. 1D

FIG. 2A

FIG. 2B

FIG. 2E

FIG. 2C

FIG. 2D